# EUROPEAN PATENT SPECIFICATION

(11) **EP 3 324 677 B1**
(45) Date of publication and mention of the grant of the patent: **28.07.2021**
(21) Application number: 15900641.0
(22) Date of filing: 07.08.2015
(51) Int. Cl.: H04W 48/20, H04W 76/20, H04W 36/00

(54) **NETWORK ACCESS CHANGE FOR A TERMINAL FROM AN ACCESS THROUGH A RELAY TERMINAL TO A DIRECT ACCESS**
ÄNDERUNG EINES NETZWERKZUGRIFFS EINER TERMINAL VON EINEM ZUGRIFF ÜBER EIN RELAY TERMINAL ZU EINER DIREKT ZUGRIFF
CHANGEMENT D'ACCÈS RÉSEAU POUR UN TERMINAL D'UN ACCÈS PAR UN TERMINAL RELAIS À UN ACCÈS DIRECT

(43) Date of publication of application: 23.05.2018
(73) Proprietor: Huawei Technologies Co., Ltd., Longgang District Shenzhen, Guangdong 518129 (CN)
(72) Inventor: JIN, Hui, Shenzen, Guangdong 518129 (CN); DUAN, Xiaoyan, Shenzen, Guangdong 518129 (CN)
(74) Representative: Körber, Martin Hans
(86) International application number: PCT/CN2015/086371
(87) International publication number: WO 2017/024442

(56) References cited:
- EP-A1- 2 903 390
- CN-A- 1 881 958
- CN-A- 103 987 092
- US-A1- 2015 100 621
- ERICSSON: "ProSe UE-Network Relaying and Service Continuity Concept", 3GPP DRAFT; R3-150752, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Santa Cruz, Spain; 20150420 - 20150424 11 April 2015 (2015-04-11), XP050937363, Retrieved from the Internet: URL:http://www.3gpp.org/ftp/Meetings_3GPP_ SYNC/RAN3/Docs/ [retrieved on 2015-04-11]
- CATT: "Consideration for ProSe one to one communication and service continuity aspects", 3GPP DRAFT; S2-143882, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2 17 November 2014 (2014-11-17), XP050881054, Retrieved from the Internet: URL:http://www.3gpp.org/ftp/Meetings_3GPP_ SYNC/SA2/Docs/ [retrieved on 2014-11-17]
- MOTOROLA: "Signalling flows for optimized handover from mobile WiMAX to 3GPP access: UE-initiated without resource preparation (TS 23.402)", 3GPP DRAFT; S2-073883 HANDOVER_WIMAX_3GPP_UE_FLOWS_1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Helsinki, Finland; 20070827 - 20070831 3 September 2007 (2007-09-03), XP050773537, Retrieved from the Internet: URL:http://www.3gpp.org/ftp/tsg_sa/WG2_Arc h/TSGS2_59_Helsinki/Docs/ [retrieved on 2007-09-03]
- HUAWEI ET AL: "Considerations on ProSe Direct Communication packet filter", 3GPP DRAFT; S2-150280_CONSIDERATION ON PROSE DIRECT COMMUNICAITON FOR PATH SWITCH_V1.6, 3RD GENERATION PARTNERSHIP PROJECT (3GPP), MOBILE COMPETENCE CENTRE ; 650, ROUTE DES LUCIOLES ; F-06921 SOPHIA-A , vol. SA WG2, no. Sorrento, Italy; 20150126 - 20150130 20 January 2015 (2015-01-20), XP050961415, Retrieved from the Internet: URL:http://www.3gpp.org/ftp/tsg_sa/WG2_Arc h/TSGS2_107_Sorrento/Docs/ [retrieved on 2015-01-20]
- ERICSSON: "UE-to-Network Relay selection", 3GPP DRAFT; R2-152461 - UE-NW RELAY SELECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Fukuoka, Japan; 20150525 - 20150529 24 May 2015 (2015-05-24), XP050971757, Retrieved from the Internet: URL:http://www.3gpp.org/ftp/Meetings_3GPP_ SYNC/RAN2/Docs/ [retrieved on 2015-05-24]
- None

## Description

### TECHNICAL FIELD

The present invention relates to the communications field, and specifically, to a data transmission method, a method for accessing a network, a related device, and a system.

### BACKGROUND

With rapid development of technologies, wearable devices appear in people's life. Directly connecting a wearable device to a network will be a development tendency in future. However, because a wearable device has a small battery capacity, when the wearable device directly performs network communication with a base station, rapid battery consumption and a short standby time are caused. In addition, the wearable device has a special shape, resulting in difficult antenna design. At present, only single-antenna design can be implemented, and only data of a same quantity can be sent. Compared with multiple antennas, more time needs to be spent, and lots of network resources need to be consumed.

Usually, there is a high-performance mobile terminal around a wearable device. The mobile terminal and the wearable device separately perform network communication, and no resultant force is formed. Therefore, by connecting the wearable device to a network by using the mobile terminal, a quantity of electricity of the wearable device can be saved, and transmission efficiency of the wearable device can be improved.

At present, a wearable device may access a network by using a mobile terminal, to perform a related service of the wearable device. However, after the wearable device accesses the network by using the mobile terminal, when the wearable device subsequently moves away from the mobile terminal, communication interruption may occur. Consequently, continuity of the related service of the wearable device cannot be ensured. The document ERICSON: "ProSe UE-Network Relaying and Service Continuity Concept", 3GPP Draft, R3-150752, 3rd Generation Partnership Project (3GPP), Mobile Competence Centre, 650, Rout Des Lucioles, F-06921 Sophia Antipolis Cedex, France, vol. RAN WG3, no. Santa Cruz, Spain, 20150420 - 20150424 11 April 2015 (2015-04-11), XP050937363 shows a data transmission method comprising requesting, by a first UE, resources for an EPC path, receiving the requested resources and starting transmitting UL data.
The document CATT: "Consideration for ProSe one to one communication and service continuity aspects", 3GPP Draft, S2-143882, 3rd Generation Partnership Project (3GPP), Mobile Competence Centre, 650, Rout Des Lucioles, F-06921 Sophia Antipolis Cedex, France, vol. SA WG2 17 November 2014 (2014-11-17), XP050881054 shows a method to switch from an infrastructure path to a direct path and direct traffic to the direct path. UE A sends a Bearer Resource Modification (TAD, QoS) message to the MME, e.g. to modify the TFT of the impacted EPS bearer. The MME sends the Bearer Resource Modification request to PGW. The PGW initiates dedicated bearer establishment procedure or a bearer modification procedure.
The document EP 2 903 390 A1 shows a method and system in which a first UE relays user data for a second UE and the second UE is connected to the first UE via a D2D connection and the first UE is connected to a radio base station. If the second UE detects an improvement of the received signal quality of the downlink signal received from the radio base station, the second UE requests the release of the D2D connection and transmits a connection request message to the base station. Cellular communication between the second UE and the radio base station is performed.

### SUMMARY

Embodiments of the present invention provide a data transmission method according to independent claim 1, and a first user equipment according to independent claim 4, so as to ensure, from a time when a wearable device accesses a network by using a mobile terminal to a time when the wearable device moves away from the mobile terminal, continuity of a related service of the wearable device. Additional features of the invention are presented in the dependent claims. In the following, parts of the description and drawings referring to embodiments which are not covered by the claims are not presented as embodiments of the invention, but as examples useful for understanding the invention

By means of the foregoing technical solutions, a core network entity receives a first message sent by first user equipment UE, where the first message is used by the first UE to request to change from accessing a network by using second UE to directly accessing the network; and the core network entity sets up a target bearer on the first UE, so that the first UE transmits data by using the target bearer. Communication is not interrupted, so as to ensure continuity of a related service of the first UE.

### BRIEF DESCRIPTION OF DRAWINGS

FIG. 1 is a schematic flowchart of a data transmission method according to an embodiment of the present invention;
FIG. 2 is another schematic flowchart of a data transmission method according to an embodiment of the present invention;
FIG. 3 is a schematic flowchart of a method for accessing a network according to an embodiment of the present invention;
FIG. 4 is another schematic flowchart of a method for accessing a network according to an embodiment of the present invention;
FIG. 5 is another schematic flowchart of a data transmission method according to an embodiment of the present invention;
FIG. 6 is another schematic flowchart of a method for accessing a network according to an embodiment of the present invention;
FIG. 7 is another schematic flowchart of a method for accessing a network according to an embodiment of the present invention;
FIG. 8 is a schematic structural diagram of a data transmission apparatus according to an embodiment of the present invention;
FIG. 9 is another schematic structural diagram of a data transmission apparatus according to an embodiment of the present invention;
FIG. 10 is a schematic structural diagram of an apparatus for accessing a network according to an embodiment of the present invention; and
FIG. 11 is another schematic structural diagram of an apparatus for accessing a network according to an embodiment of the present invention.

### DESCRIPTION OF EMBODIMENTS

Embodiments of the present invention provide a data transmission method, a method for accessing a network, a related device, and a system, so as to ensure, from a time when a wearable device accesses a network by using a mobile terminal to a time when the wearable device moves away from the mobile terminal, continuity of a related service of the wearable device.

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person skilled in the art based on the embodiments of the present invention without creative efforts shall fall within the protection scope of the present invention. that is defined by the claims.

In the specification, claims, and accompanying drawings of the present invention, the terms "first", "second", "third", "fourth", and so on are intended to distinguish between different objects but do not indicate a particular order. In addition, the terms "including", "including", or any other variant thereof, are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

The technical solutions of the present invention may be applied to various communications systems, such as: a Global System for Mobile Communications (English full name: Global System for Mobile Communication, GSM for short), a Code Division Multiple Access (English full name: Code Division Multiple Access, CDMA for short) system, Wideband Code Division Multiple Access (English full name: Wideband Code Division Multiple Access, WCDMA for short), a general packet radio service (English full name: General Packet Radio Service, GPRS for short), and Long Term Evolution (English full name: Long Term Evolution, LTE for short).

First, it is noted that a core network entity mentioned in the embodiments of the present invention refers to an entity that can implement a mobility management logic function of user equipment. The core network entity may have different names, locations, and product forms in different networks.

For example, the core network entity mentioned in the embodiments of the present invention may refer to: a mobile management entity (English full name: Mobile Management Entity, MME for short) connected to an evolved universal mobile telecommunications system (English full name: Universal Mobile Telecommunications System, UMTS for short) terrestrial radio access network (English full name: Evolved UMTS Territorial Radio Access Network, E-UTRAN for short); a serving general packet radio service support node (English full name: Serving GPRS (General Packet Radio Service) Support Node, SGSN for short) connected to a UMTS terrestrial radio access network (English full name: UMTS Territorial Radio Access Network, UTRAN for short)/a GSM EDGE radio access network (English full name: GSM EDGE Radio Access Network, GERAN for short); an access gateway (English full name: Access Gateway, AGW for short) in a non-3GPP network; an entity having a mobile management logic function of an evolved packet data gateway (English full name: Evolved Packet Data Gateway, EPDG for short) in a wireless local area network (English full name: Wireless Local Area Network, WLAN for short); an access service network gateway (English full name: Access Service Network Gateway, ASN GW for short) in a Worldwide Interoperability for Microwave Access (English full name: Worldwide Interoperability for Microwave Access, WiMAX for short) network; an entity having an access mobile management logic function of a high rate packet data access network (English full name: High Rate Packet Data Access Network, HRPD-AN for short) in a Wideband Code Division Multiple Access (English full name: Code Division Multiple Access, CDMA for short) network; or an entity implementing mobile management logic function of user equipment in another network.

First UE may be a wearable device/equipment (English full name: Wearable Device, WD for short; or English full name: Wearable Equipment, WE for short) or the like. The wearable device is a portable device that is directly body-worn or that is integrated into clothes or an accessory of a user. The wearable device, for example, a smart watch, a smart wrist strap, or smart glasses, is not only a hardware device, but also implements a powerful function by means of software support, data exchange, or cloud interaction. This is not limited in the present invention.

Second UE may be a mobile terminal (Mobile Terminal), mobile user equipment, or the like, and may communicate with one or more core networks by using a radio access network (English full name: Radio Access Network, RAN for short). The second UE may be a mobile terminal, for example, a mobile phone (or referred to as a "cellular" phone) or a computer having a mobile terminal. For example, the second UE may be a portable, pocket-sized, handheld, computer-built in, or in-vehicle mobile apparatus. The second UE exchanges a language and/or data with the radio access network.

A first gateway may be a serving gateway (English full name: Serving Gate Way, SGW for short), or the like.

A second gateway may be a packet data network gateway (English full name: Packet Data Network Gate Way, PGW for short), or the like. The first gateway and the second gateway are gateways serving the first UE or are gateways serving the second UE. This is not limited in the present invention.

A base station may be a base transceiver station (English full name: Base Transceiver Station, BTS for short) in GSM or CDMA, or may be a NodeB (Node B) in WCDMA, or may be an evolved NodeB (English full name: evolutional Node B, eNB or e-Node B for short) in LTE. This is not limited in the present invention.

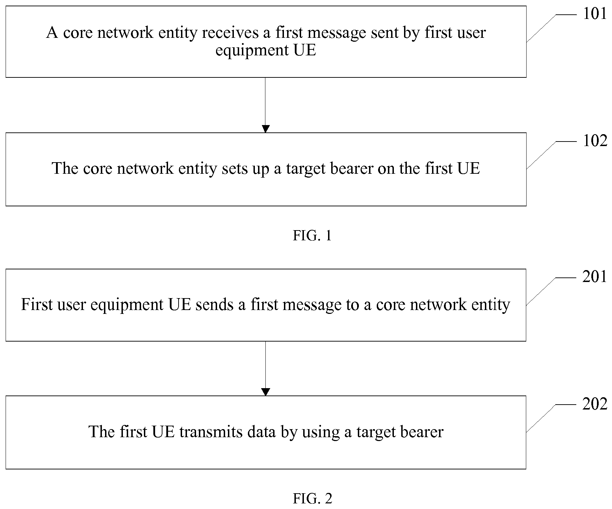

Referring to FIG. 1, an embodiment of a data transmission method in an embodiment of the present invention, which is specifically an embodiment of a data transmission method on a core network entity side, includes: receiving, by a core network entity, a first message sent by first user equipment UE, where the first message is used by the first UE to request to change from accessing a network by using second UE to directly accessing the network; and setting up, by the core network entity, a target bearer on the first UE, so that the first UE transmits data by using the target bearer.

A specific process is as follows:
101: The core network entity receives the first message sent by the first user equipment UE.

The first message includes path change indication information. The first message is a tracking area update TAU message.

102: The core network entity sets up the target bearer on the first UE.

The core network entity learns, according to the first message, that the first UE requests to change from accessing a network by using second UE to directly accessing the network, and the core network entity sets up the target bearer on the first UE, so that the first UE transmits data by using the target bearer.

In some optional embodiments, the setting up, by the core network entity, a target bearer on the first UE includes:
obtaining, by the core network entity, bearer context of the first UE; and
setting up, by the core network entity, the target bearer on the first UE according to the bearer context of the first UE.

Further, the setting up, by the core network entity, the target bearer on the first UE according to the bearer context of the first UE includes:
sending, by the core network entity, a second message to a base station, so that the base station sends a third message to the first UE, and sends a fourth message to the core network entity, where
the second message may be a bearer setup request (Bearer Setup Request) message; the third message may be a radio bearer setup request (radio bearer Setup Request or Radio Resource Control Connection Reconfiguration) message; the fourth message is a bearer setup response (Bearer Setup Response) message; and certainly, the second message, the third message, and the fourth message may also be replaced by another message representing a same function, and this is not specifically limited herein; and
receiving, by the core network entity, the fourth message, so as to set up a bearer between the first UE and a gateway.

In some optional embodiments, after the setting up, by the core network entity, a target bearer on the first UE, the method further includes:
obtaining, by the core network entity, the bearer context of the first UE, where the bearer context of the first UE saves a mapping relationship between a first EBI corresponding to the target bearer on the first UE and a second EBI of the second UE; and
obtaining, by the core network entity, the second EBI of the second UE according to the mapping relationship, and sending a fifth message to the base station, so that the base station sends a sixth message to the second UE, to delete a bearer corresponding to the second EBI of the second UE.

The fifth message is a deactivate bearer request (Deactivate Bearer Request) message. The sixth message is a radio resource control connection reconfiguration (Radio Resource Control Connection Reconfiguration) message. Certainly, the fifth message and the sixth message may also be replaced by another message representing a same function. This is not specifically limited herein.

Further, after the deleting a bearer corresponding to the second EBI of the second UE, the method further includes:
deleting, by the core network entity, the mapping relationship between the first EBI and the second EBI in the bearer context of the first UE.

In this embodiment of the present invention, a core network entity receives a first message sent by first user equipment UE, where the first message is used by the first UE to request to change from accessing a network by using second UE to directly accessing the network; and the core network entity sets up a target bearer on the first UE, so that the first UE transmits data by using the target bearer. Communication is not interrupted, so as to ensure continuity of a related service of the first UE.

Based on the embodiment shown in FIG. 1, referring to FIG. 2, an embodiment of transmitting data on a user equipment side in an embodiment of the present invention includes: sending, by first user equipment UE, a first message to a core network entity, so that the core network entity sets up a target bearer on the first UE, where the first message is used by the first UE to request to change from accessing a network by using second UE to directly accessing the network; and transmitting, by the first UE, data by using the target bearer.

A specific process is as follows:
201: The first user equipment UE sends the first message to the core network entity.

The first message includes path change indication information. The first message is a tracking area update TAU message. The path change indication information is used to indicate that the first message is used to request to change a path, for example, change from a communication path for accessing a network by using another UE to a communication path for directly accessing the network.

The first UE sends the first message to the core network entity, so that the core network entity learns, according to the first message, that the first UE requests to change from accessing a network by using second UE to directly accessing the network, and the core network entity sets up a target bearer on the first UE.

202: The first UE transmits data by using the target bearer.

The first UE transmits the data according to the target bearer set up by the core network entity, so as to ensure continuity of a related service of the first UE.

For the first UE, a bearer (for example, an EPS bearer) for transmitting data includes two parts: a bearer between the first UE and a first gateway (for example, a serving GW), and a bearer between the first gateway and a second gateway (for example, a PDN GW). The target bearer is a bearer between the first UE and the first gateway. In this solution, a communication path from the first UE to the first gateway is merely changed from connecting to the first gateway by using the second UE to directly connecting to the first gateway, and the bearer between the first gateway and the second gateway remains unchanged. The second gateway is to assign an IP address to the first UE. Therefore, in this solution, the second gateway is unchanged, so as to ensure continuity of a service of the first UE.

In some optional embodiments, before the sending, by first user equipment UE, a first message to a core network entity, the method further includes:
sending, by the first UE, a seventh message to the second UE, where the seventh message is used to request the second UE to send network information to the first UE;
receiving, by the first UE, the network information sent by the second UE; and
accessing, by the first UE, the network by using the network information.

The seventh message is a network information request message.

The network information includes at least one of the following content:
a globally unique temporary UE identity GUTI of the first UE;
an access frequency of a cell on which the second UE currently camps;
a physical cell ID of a cell on which the second UE currently camps; or
a system information block SIB of a cell on which the second UE currently camps.

It should be noted that the network information may be one type, or may be a combination of multiple types. Besides, in addition to the foregoing several types, the network information may be other content. This is not specifically limited herein.

In some optional embodiments, before the transmitting, by the first UE, data by using the target bearer, the method further includes:
modifying, by the first UE, a mapping target of an uplink traffic flow template TFT from a device to device bearer identity DBI to a first EBI corresponding to the target bearer on the first UE. The DBI is an identity of a bearer directly used by the first UE and the second UE to transmit the data of the first UE. The DBI may also be replaced by another identity representing a same function, and this is not specifically limited herein.

Further, after the modifying, by the first UE, a mapping target of an uplink traffic flow template TFT from a device to device bearer identity DBI to a first EBI corresponding to the target bearer on the first UE, the method further includes:
deleting, by the first UE, a mapping relationship between the DBI and the first EBI.

In this embodiment of the present invention, first user equipment UE sends a first message to a core network entity, so that the core network entity sets up a target bearer on the first UE, where the first message is used by the first UE to request to change from accessing a network by using second UE to directly accessing the network; and the first UE transmits data by using the target bearer. Communication is not interrupted, so as to ensure continuity of a related service of the first UE.

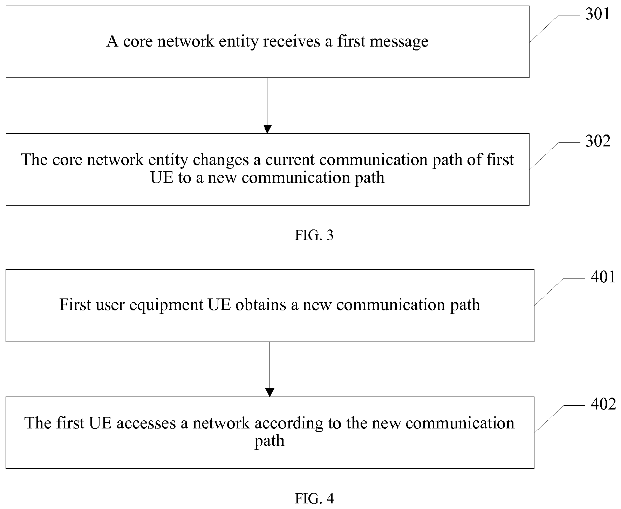

Based on the embodiments shown in FIG. 1 and FIG. 2, referring to FIG. 3, an embodiment of a method for accessing a network in an embodiment of the present invention, which is specifically an embodiment of a method for accessing a network on a core network entity side, includes:
receiving, by a core network entity, a first message, where the first message is used to request the core network entity to change a current communication path of the first UE; and changing, by the core network entity, the current communication path of the first UE to a new communication path, so that the first UE accesses a network by using the new communication path.

A specific process is as follows:

301: The core network entity receives the first message.

The first message is a path change request message.

302: The core network entity changes the current communication path of the first UE to the new communication path.

The core network entity learns, according to the first message, that the first UE requests to change the current communication path, and the core network entity changes, by using an indication of the first message, the current communication path of the first UE to the new communication path, so that the first UE accesses a network by using the new communication path.

In some optional embodiments, the receiving, by a core network entity, a first message includes:
receiving, by the core network entity, the first message sent by the second UE, where the first message includes an identity of the first UE.

In some other optional embodiments, the receiving, by a core network entity, a first message includes:
receiving, by the core network entity, the first message that is sent by the first UE by using the second UE, where the first message includes an identity of the first UE and an evolved universal terrestrial radio access network cell global identifier (English full name: E-UTRAN Cell Global Identifier, ECGI for short) of a target cell that is detected by the first UE.

The target cell is a cell that is detected by the first UE and that has maximum signal strength. Optionally, the first UE sorts, in descending order of strength, signals that are detected, and selects a cell having a strongest signal as the target cell.

Further, in some optional embodiments, the changing, by the core network entity, a current communication path of the first UE to a new communication path includes:
sending, by the core network entity, a second message to a first base station, so that the first base station generates a target to source transparent container (Target to Source Transparent Container), and sends the target to source transparent container to the core network entity by using a third message, where the first base station is a base station serving the second UE, where
the second message may be a handover request (Handover Request) message; the third message may be a handover request acknowledgement (Handover Request ACK) message; and certainly, the second message and the third message may also be replaced by another message representing a same function, and this is not specifically limited herein; and
changing, by the core network entity, the current communication path of the first UE to the new communication path according to the target to source transparent container.

It should be noted that the target to source transparent container includes a resource that is allocated by the first base station to the first UE and that is used to access the first base station. The resource includes a physical cell ID of a target cell to be accessed by the first UE, information about an access frequency, a random access code, information about a data radio bearer (data radio bearer), or the like. The resource may be specifically included in an RRC reconfiguration message generated by the first base station. The target cell belongs to the first base station. The core network entity sends the target to source transparent container to the second UE, so that the second UE sends the target to source transparent container to the first UE, and the first UE accesses the first base station according to the target to source transparent container, so as to set up the new communication path. The first UE may specifically access the first base station according to the RRC reconfiguration message included in the target to source transparent container.

In some other optional embodiments, the changing, by the core network entity, a current communication path of the first UE to a new communication path includes:
obtaining, by the core network entity, a second base station, where the second base station is a base station corresponding to the ECGI;
sending, by the core network entity, a fourth message to the first base station, so that the first base station sends a fifth message to the core network entity, where
the fourth message may be a handover resource request (Handover Resource Request) message; the fifth message may be a handover resource request acknowledgement (Handover Resource Request ACK) message; and certainly, the fourth message and the fifth message may also be replaced by another message representing a same function, and this is not specifically limited herein;
sending, by the core network entity, a second message to the second base station, so that the second base station generates a target to source transparent container, and sends the target to source transparent container to the core network entity by using a third message; and
changing, by the core network entity, the current communication path of the first UE to the new communication path according to the target to source transparent container.

It should be noted that the core network entity sends the target to source transparent container to the first UE by using the second UE, so that the first UE accesses the second base station according to the target to source transparent container, so as to set up the new communication path.

Further, the sending, by the core network entity, a second message to a first base station, so that the first base station generates a target to source transparent container includes:
obtaining, by the core network entity, a first evolved packet system bearer identity EBI, where the first EBI is an EBI of the first UE;
obtaining, by the core network entity, a second EBI of the second UE according to the first EBI of the first UE; and
adding, by the core network entity, the second EBI to the second message, so that the first base station generates the target to source transparent container (Target to Source Transparent Container) according to the second EBI.

Further, the sending, by the core network entity, a second message to the second base station, so that the second base station generates a target to source transparent container includes:
obtaining, by the core network entity, a first EBI, where the first EBI is an EBI of the first UE;
obtaining, by the core network entity, a second EBI of the second UE according to the first EBI of the first UE;
adding, by the core network entity, the second EBI to the fourth message, so that the first base station generates a source to target transparent container according to the second EBI, and sends the source to target transparent container to the core network entity by using the fifth message, where the source to target transparent container includes a resource of a cell in which the second UE is currently located, and the resource includes a physical cell ID of the cell in which the second UE is currently located, information about an access frequency, a random access code, information about a data radio bearer (data radio bearer) corresponding to the second EBI, or the like; and the cell in which the second UE is currently located belongs to the first base station; and
adding, by the core network entity, the source to target transparent container to the second message, so that the second base station generates the target to source transparent container according to the source to target transparent container.

In this embodiment, only a case in which the first base station and the second base station are different is listed, for a case in which the core network entity determines, according to an ECGI, that the first base station and the second base station are the same, processing may be performed according to 202 or 302. This is not specifically limited herein.

In some optional embodiments, after the changing, by the core network entity, a current communication path of the first UE to a new communication path, the method further includes:
obtaining, by the core network entity, bearer context of the first UE, where the bearer context of the first UE saves a mapping relationship between the first EBI corresponding to the target bearer of the first UE and the second EBI of the second UE; and
obtaining, by the core network entity, the second EBI of the second UE according to the mapping relationship, and sending a sixth message to the first base station, so that the first base station sends a seventh message to the second UE, to delete a bearer corresponding to the second EBI of the second UE.

The sixth message may be a deactivate bearer request (Deactivate Bearer Request) message. The seventh message may be a deactivate bearer response (Deactivate Bearer Response) message. Certainly, the sixth message and the seventh message may also be replaced by another message representing a same function. This is not specifically limited herein.

Further, after the deleting a bearer corresponding to the second EBI of the second UE, the method further includes:
deleting, by the core network entity, the mapping relationship between the first EBI of the first UE and the second EBI of the second UE in the bearer context of the first UE.

In this embodiment of the present invention, a core network entity receives a first message, where the first message is used to request the core network entity to change a current communication path of the first UE; and the core network entity changes the current communication path of the first UE to a new communication path, so that the first UE accesses a network by using the new communication path. Communication is not interrupted, so as to ensure continuity of a related service of the first UE.

Based on the embodiment shown in FIG. 3, referring to FIG. 4, another embodiment of a method for accessing a network in an embodiment of the present invention, which is specifically an embodiment of a method for accessing a network on a user equipment side, includes:
obtaining, by first user equipment UE, a new communication path, and changing, by a core network entity, a current communication path of the first UE to the new communication path; and accessing, by the first UE, a network according to the new communication path.

A specific process is as follows:
401: The first user equipment UE obtains the new communication path.

A core network entity changes a current communication path of the first UE to the new communication path.

In some optional embodiments, before the obtaining, by first user equipment UE, a new communication path, the method further includes:
obtaining, by the first UE, network information from the second UE;
obtaining, by the first UE according to the network information, an evolved universal terrestrial radio access network cell global identifier ECGI of a target cell that is detected by the first UE; and
sending, by the first UE, a first message to the second UE, so that the second UE sends the first message to the core network entity.

Further, the network information includes at least one of the following content:
a globally unique temporary UE identity GUTI of the first UE;
an access frequency of a cell on which the second UE currently camps;
a physical cell ID of a cell on which the second UE currently camps; or
a system information block SIB of a cell on which the second UE currently camps.

402: The first UE accesses the network according to the new communication path.

In some optional embodiments, after the accessing, by the first UE, a network according to the new communication path, the method further includes:
modifying, by the first UE, a mapping target of an uplink traffic flow template TFT from a device to device bearer identity DBI to a first EBI corresponding to the target bearer on the first UE.

Further, after the modifying, by the first UE, a mapping target of an uplink traffic flow template TFT from a device to device bearer identity DBI to a first EBI corresponding to the target bearer on the first UE, the method further includes:
deleting, by the first UE, a mapping relationship between the DBI and the first EBI.

In this embodiment of the present invention, first user equipment UE obtains a new communication path, and a core network entity changes a current communication path of the first UE to the new communication path; and the first UE accesses a network according to the new communication path. It can be seen that communication is not interrupted, so as to ensure continuity of a related service of the first UE.

Based on the foregoing embodiments, an embodiment of an application scenario of data transmission is further described. In this embodiment, an example in which first UE is a wearable device, for example, a WD, and second UE is a terminal is used. Specifically, a process in which after the WD accesses a network by using the terminal, when the WD moves away from the terminal, the WD still has a related service currently, and the WD directly accesses the network by itself is specifically as follows:
501: The WD sends a network information request to the terminal.

The WD accesses a network by using the terminal, and is in a connected state in this case. However, the WD detects that a distance between the WD and the terminal is increasing. Consequently, a network signal of the WD becomes poorer, a related service of the WD is affected, and the like. Therefore, the WD sends the network information request to the terminal, and expects to obtain network information from the terminal, so as to directly access the network by using the obtained network information.

502: The terminal sends a network information response to the WD.

The terminal sends the network information response to the WD, so that the WD obtains the network information. The network information includes one of or a combination of multiple of a globally unique temporary UE identity (English full name: Globally Unique Temporary UE Identity, GUTI for short) of the WD, an access frequency of a cell on which the terminal currently camps, a physical cell ID (English full name: physical cell identity, PCI for short) of a cell on which the terminal currently camps, or a system information block (English full name: system information block, SIB for short) of a cell on which the terminal currently camps. It should be noted that in addition to the several types, content included in the network information may be other content. This is not specifically limited herein.

503: The WD directly accesses a network.

The WD changes from accessing the network by using the terminal to directly accessing the network by itself, and the WD directly accesses the network by using the network information. Communication is not interrupted, so as to ensure continuity of a related service of the WD.

504: The WD sends a TAU message to a core network entity.

The WD sends the TAU message to the core network entity by using the terminal, where the TAU message includes the GUTI of the WD and path change indication information.

505: The core network entity obtains bearer context of the WD.

The core network entity learns, according to the TAU message, that the WD already accesses the network by itself and is in a network connected state. The core network entity obtains the bearer context of the WD, and learns that a corresponding target bearer needs to be set up for the WD. The target bearer may be a bearer between the WD and a serving gateway corresponding to the WD. This is not specifically limited herein.

Optionally, the core network entity determines, according to indication information of the WD, that the WD cannot set up the target bearer by itself, and then the core network entity replaces the WD to set up the target bearer. Certainly, when the WD is capable of setting up the target bearer, the WD may set up the target bearer by itself. This is not specifically limited herein.

506: The core network entity sends a bearer setup request to a base station.

It can be understood that the core network entity expects to obtain, from the base station, a radio resource for setting up the target bearer, and further sets up a radio bearer between the base station and the WD.

507: The WD sets up a radio bearer between the WD and the base station.

The base station sends a radio bearer setup request to the WD, and the WD sends a radio bearer setup response to the base station, so as to set up the radio bearer between the WD and the base station.

508: The WD deletes a mapping relationship between a DBI and a first EBI.

A mapping target of an uplink traffic flow template TFT is modified from the DBI to the first EBI corresponding to the target bearer on the WD, and the mapping relationship between the DBI and the first EBI is deleted. The WD locally saves the mapping relationship between the DBI and the first EBI.

509: The base station sends a bearer setup response message to the core network entity.

After the WD deletes the locally saved mapping relationship between the DBI and the first EBI, the base station further sends the bearer setup response message to the core network entity.

510: The core network entity sends a modify bearer request to a first gateway.

The first gateway may be a serving gateway corresponding to the terminal. This is not specifically limited herein.

511: The first gateway sends a modify bearer response message to the core network entity.

512: The core network entity sends a TAU confirm message to the WD.

The WD receives the TAU confirm message sent by the core network entity, so as to set up the target bearer on the WD.

513: The core network entity learns that a mapping relationship between the first EBI and a second EBI needs to be deleted.

Further, the core network entity obtains bearer context of the WD, where the bearer context of the WD saves the mapping relationship between the first EBI corresponding to the target bearer on the WD and the second EBI of the terminal.

514: The core network entity sends a deactivate bearer request to the base station.

When the second UE is in an idle (idle) state, the core network entity may make, by using a paging process, the second UE in a connected state, so as to send the deactivate bearer request to the base station.

515: The base station sends an RRC connection reconfiguration message to the terminal.

The core network entity obtains the second EBI of the terminal according to the mapping relationship, and sends the deactivate bearer request to the base station, so that the base station sends the RRC connection reconfiguration message to the terminal, to delete a bearer corresponding to the second EBI of the terminal.

Further, the core network entity deletes the mapping relationship between the first EBI of the WD and the second EBI in the bearer context.

516: The terminal learns that the core network entity deletes a bearer corresponding to the second EBI.

The terminal learns, by using the RRC connection reconfiguration message sent by the base station, that the core network entity deletes the bearer corresponding to the second EBI.

517: The terminal sends an RRC connection reconfiguration complete message to the base station.

518: The base station sends a deactivate bearer response message to the core network entity.

The terminal sends the RRC connection reconfiguration message to the base station, so that the base station sends the deactivate bearer response message to the core network entity, and further, the WD deletes a bearer between the WD and the terminal.

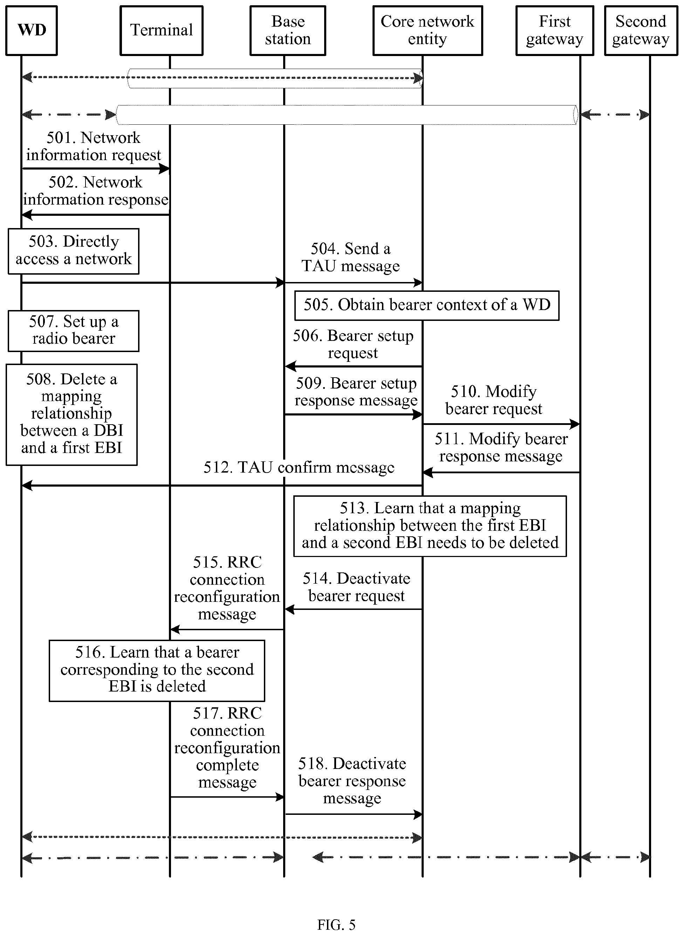

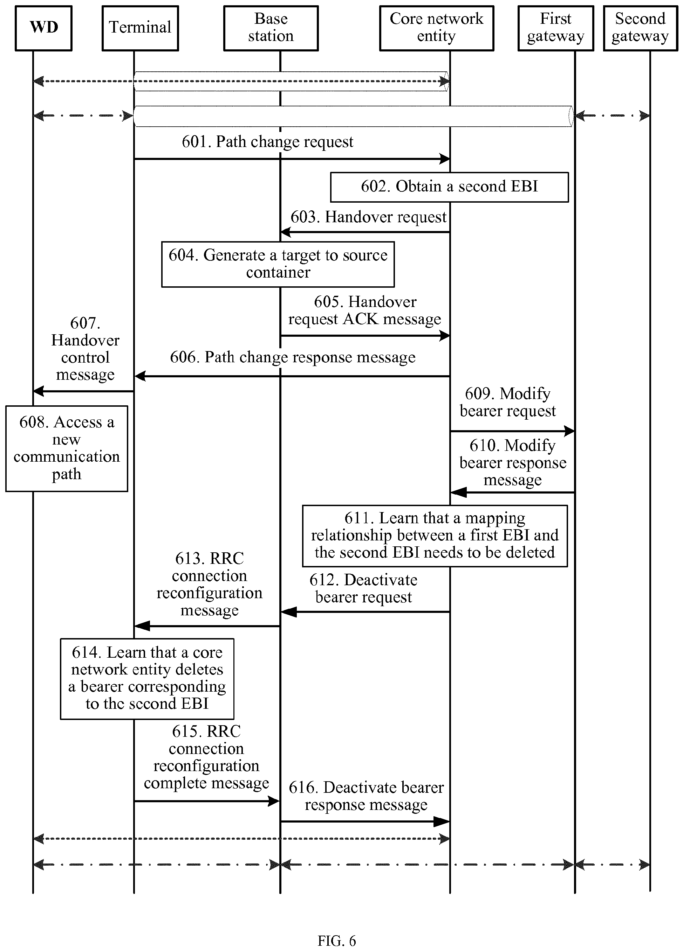

Based on the embodiment shown in FIG. 5, further, referring to FIG. 6, in this embodiment, an example in which first UE is a WD, and second UE is a terminal is used. Specifically, a process in which after the WD accesses a network by using the terminal, when the WD moves away from the terminal, the WD still has a related service currently, and the second UE replaces the first UE to request to change a communication path is specifically as follows:
601: The terminal sends a path change request to a core network entity.

When the terminal detects that signal strength between the terminal and the WD is less than a preset threshold, the terminal sends the path change request to the core network entity, where the path change request includes a GUTI of the WD.

602: The core network entity obtains a second EBI.

The core network entity obtains the second EBI by receiving the path change request sent by the terminal and by using a saved mapping relationship between a first EBI and the second EBI.

603: The core network entity sends a handover request (Handover Request) to a base station.

The base station is a base station serving the terminal.

604: The base station generates a target to source transparent container.

The base station generates the target to source transparent container (Target to Source Transparent Container) according to the received handover request, where the target to source transparent container includes a resource that is allocated by the base station to the WD and that is used to access the base station.

605: The base station sends a handover request ACK message to the core network entity.

Further, the base station sends the handover request ACK message to the core network entity, where the handover request ACK message carries the target to source transparent container.

606: The core network entity sends a path change response message to the terminal.

The core network entity sends the target to source transparent container to the terminal by using a change response message.

607: The terminal sends a handover control message to the WD.

The terminal sends the target to source transparent container to the WD by using the handover control message.

608: The WD accesses a new communication path.

The WD accesses the new communication path by receiving the target to source transparent container. Communication is not interrupted, so as to ensure continuity of a related service of the WD.

609: The core network entity sends a modify bearer request to a first gateway.

610: The first gateway sends a modify bearer response message to the core network entity.

The WD accesses the base station according to a parameter in the target to source transparent container, and the WD sends a handover confirm (handover confirm) message to the base station. Further, the base station sends a handover notify (handover notify) message to the core network entity. Further, the core network entity sends the modify bearer request (modify bearer Request) message to the first gateway. The first gateway sends the modify bearer response (modify bearer Response) message to the core network entity. Therefore, a bearer of the WD is set up.

611: The core network entity learns that a mapping relationship between a first EBI and the second EBI needs to be deleted.

612: The core network entity sends a deactivate bearer request to the base station.

613: The base station sends an RRC connection reconfiguration message to the terminal.

614: The terminal learns that the core network entity deletes a bearer corresponding to the second EBI.

615: The terminal sends an RRC connection reconfiguration complete message to the base station.

616: The base station sends a deactivate bearer response message to the core network entity.

Step 611 to step 616 are the same as or similar to step 513 to step 518 in the embodiment shown in FIG. 5. Specifically, refer to step 513 to step 518, and details are not described herein again.

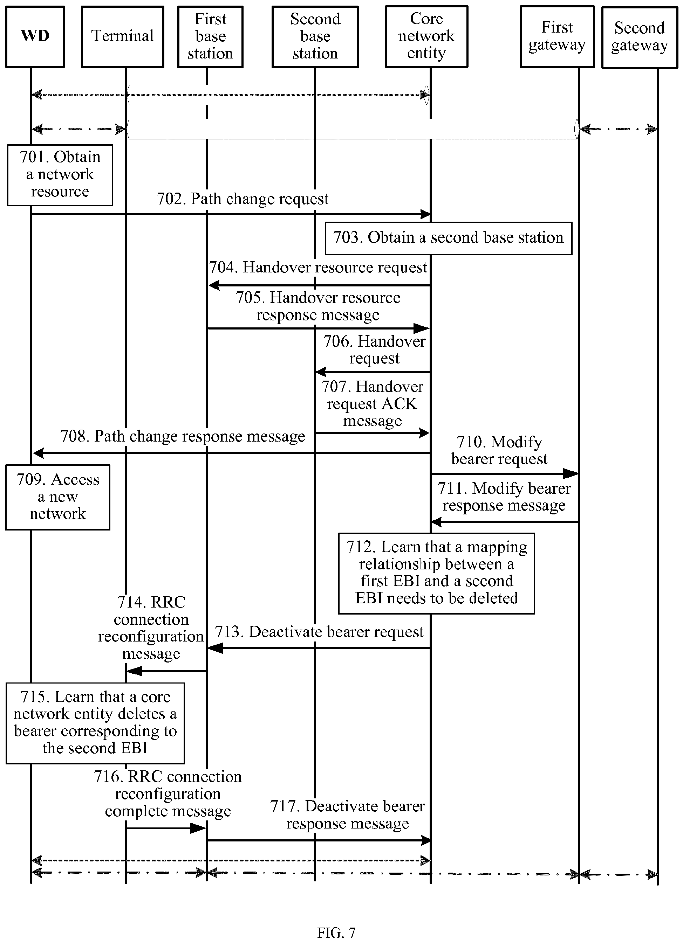

Based on the embodiment shown in FIG. 6, referring to FIG. 7, in this embodiment, an example in which first UE is a WD, and second UE is a terminal is used. Specifically, a process in which after the WD accesses a network by using the terminal, when the WD moves away from the terminal, the WD still has a related service currently, and the first UE requests to change a communication path is specifically as follows:

701: The WD obtains network information from the terminal.

The WD may send a network information request to the terminal, so that the terminal sends a network information response message to the WD, and the WD obtains the network information from the terminal.

The network information may be one of or a combination of several of a globally unique temporary UE identity GUTI of the WD, an access frequency of a cell on which the terminal currently camps, a physical cell ID of a cell on which the terminal currently camps, or a system information block SIB of a cell on which the terminal currently camps; or may include other content. This is not specifically limited herein.

702: The WD sends a path change request to a core network entity.

The WD sends the path change request to the core network entity by using the terminal. The path change request includes the GUTI of the WD and an evolved universal terrestrial radio access network cell global identifier (English full name: E-UTRAN Cell Global Identifier, ECGI for short).

It should be noted that the WD sends a special non-access stratum NAS message to the terminal by using an interface PC5. The terminal encapsulates the NAS message and sends the NAS message to the core network entity. The special NAS message may be: reusing an existing NAS message or a newly defined NAS message. For example, the reusing an existing message may be: reusing existing uplink generic NAS transport (English full name: UPLINK GENERIC NAS TRANSPORT). Content of a generic message container is indicated, by using a newly defined generic message container type generic message container type, as the NAS message of the first UE.

703: The core network entity obtains a second base station.

The second base station is a base station corresponding to the ECGI.

704: The core network entity sends a handover resource request to a first base station.

705: The first base station sends a handover resource response message to the core network entity.

The core network entity sends the handover resource request to the first base station, and expects to obtain a new resource from the first base station. Then, the first base station sends the handover resource response message to the core network entity, so that the core network entity obtains a new radio resource.

706: The core network entity sends a handover request to the second base station.

The second base station generates a target to source transparent container according to the handover request.

707: The second base station sends a handover request ACK message to the core network entity.

The handover request ACK message includes the target to source transparent container generated by the second base station.

708: The core network entity sends a path change response message to the WD by using the terminal.

The core network entity sends the target to source transparent container to the WD by using a change response message.

709: The WD accesses a new communication path.

The WD accesses the new communication path by using the target to source transparent container. It can be seen that communication is not interrupted, so as to ensure continuity of a related service of the WD.

710: The core network entity sends a modify bearer request to a first gateway.

711: The first gateway sends a modify bearer response message to the core network entity.

The WD accesses the base station according to a parameter in the target to source transparent container, and the WD sends a handover confirm (handover confirm) message to the second base station. Further, the second base station sends a handover notify (handover notify) message to the core network entity. Further, the core network entity sends the modify bearer request (modify bearer Request) message to the first gateway. The first gateway sends the modify bearer response (modify bearer Response) message to the core network entity. Therefore, a bearer of the WD is set up.

712: The core network entity learns that a mapping relationship between a first EBI and a second EBI needs to be deleted.

713: The core network entity sends a deactivate bearer request to the first base station.

714: The first base station sends an RRC connection reconfiguration message to the terminal.

715: The terminal learns that the core network entity deletes a bearer corresponding to the second EBI.

716: The terminal sends an RRC connection reconfiguration complete message to the first base station.

717: The first base station sends a deactivate bearer response message to the core network entity.

Step 712 to step 717 are the same as or similar to step 513 to step 518 in the embodiment shown in FIG. 5. Specifically, refer to step 513 to step 518, and details are not described herein again.

In this embodiment, only a case in which the first base station and the second base station are different is listed, for a case in which the core network entity determines, according to an ECGI, that the first base station and the second base station are the same, processing may be performed according to the solution in this embodiment or according to step 602 to step 616. This is not specifically limited herein.

For better implementing the foregoing related method in the embodiments of the present invention, the following further provides a related apparatus configured to coordinate with the foregoing method.

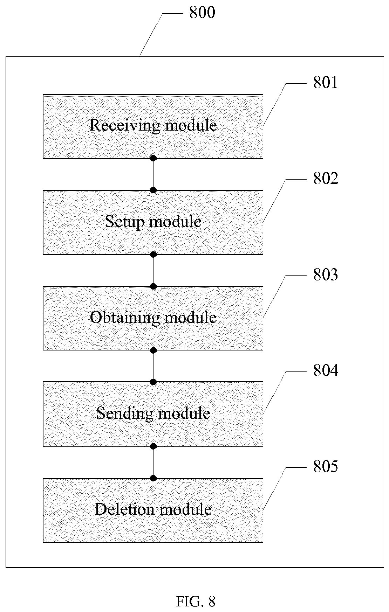

Referring to FIG. 8, an embodiment of a data transmission apparatus 800 in an embodiment of the present invention includes: a receiving module 801 and a setup module 802.

The receiving module 801 is configured to receive a first message sent by first user equipment UE, where the first message is used by the first UE to request to change from accessing a network by using second UE to directly accessing the network.

The setup module 802 is configured to set up a target bearer on the first UE, so that the first UE transmits data by using the target bearer.

In some optional embodiments,
the setup module 802 is specifically configured to: obtain bearer context of the first UE; and set up the target bearer on the first UE according to the bearer context of the first UE.

In some optional embodiments,
the setup module 802 is specifically configured to: send a second message to a base station, so that the base station sends a third message to the first UE, and sends a fourth message to the core network entity; and receive the fourth message, so as to set up a bearer between the first UE and a gateway.

In some optional embodiments, the data transmission apparatus 800 further includes:
an obtaining module 803, configured to obtain the bearer context of the first UE, where the bearer context of the first UE saves a mapping relationship between a first EBI corresponding to the target bearer on the first UE and a second EBI of the second UE, where
the obtaining module 803 is further configured to obtain the second EBI of the second UE according to the mapping relationship; and
a sending module 804, configured to send a fifth message to the base station, so that the base station sends a sixth message to the second UE, to delete a bearer corresponding to the second EBI of the second UE.

In some optional embodiments, the data transmission apparatus 800 further includes:
a deletion module 805, configured to delete the mapping relationship between the first EBI and the second EBI in the bearer context of the first UE.

The first message above includes path change indication information.

Optionally, the first message is a tracking area update TAU message.

In this embodiment of the present invention, the receiving module receives a first message sent by first user equipment UE, where the first message is used by the first UE to request to change from accessing a network by using second UE to directly accessing the network; and the setup module sets up a target bearer on the first UE, so that the first UE transmits data by using the target bearer. Communication is not interrupted, so as to ensure continuity of a related service of the first UE.

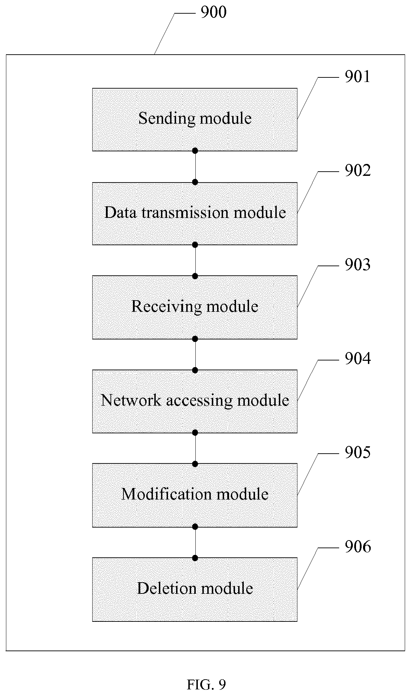

Based on the embodiment shown in FIG. 8, referring to FIG. 9, an embodiment of a data transmission apparatus 900 in an embodiment of the present invention includes: a sending module 901 and a data transmission module 902.

The sending module 901 is configured to send a first message to a core network entity, so that the core network entity sets up a target bearer on the first UE, where the first message is used by the first UE to request to change from accessing a network by using second UE to directly accessing the network.

The data transmission module 902 is configured to transmit data by using the target bearer.

In some optional embodiments, the data transmission apparatus 900 further includes:
the sending module 901, further configured to: before sending the first message to the core network entity, send a seventh message to the second UE, where the seventh message is used to request the second UE to send network information to the first UE;
a receiving module 903, configured to receive the network information sent by the second UE; and
a network accessing module 904, configured to access the network by using the network information.

Further, the network information includes at least one of the following content:
a globally unique temporary UE identity GUTI of the first UE;
an access frequency of a cell on which the second UE currently camps;
a physical cell ID of a cell on which the second UE currently camps; or
a system information block SIB of a cell on which the second UE currently camps.

In some optional embodiments, the data transmission apparatus 900 further includes:
a modification module 905, configured to: before the data transmission module transmits the data by using the target bearer, modify a mapping target of an uplink traffic flow template TFT from a device to device bearer identity DBI to a first EBI corresponding to the target bearer on the first UE.

In some optional embodiments, the data transmission apparatus 900 further includes:
a deletion module 906, configured to: after the mapping target of the uplink traffic flow template TFT is modified from the device to device bearer identity DBI to the first EBI corresponding to the target bearer on the first UE, delete a mapping relationship between the DBI and the first EBI.

Further,
the first message includes path change indication information.

Optionally,
the first message is a tracking area update TAU message.

In this embodiment of the present invention, the sending module sends a first message to a core network entity, so that the core network entity sets up a target bearer on the first UE, where the first message is used by the first UE to request to change from accessing a network by using second UE to directly accessing the network; and the data transmission module transmits data by using the target bearer. Communication is not interrupted, so as to ensure continuity of a related service of the first UE.

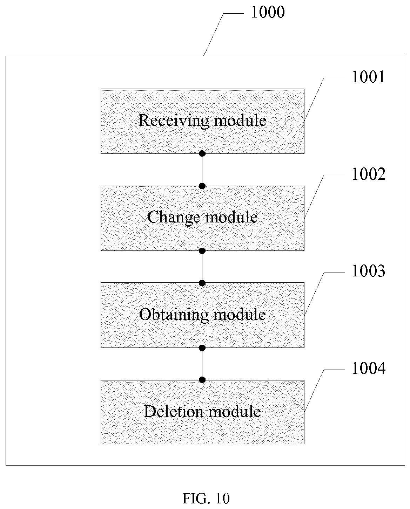

Based on the embodiments shown in FIG. 8 and FIG. 9, referring to FIG. 10, an embodiment of an apparatus 1000 for accessing a network in an embodiment of the present invention includes: a receiving module 1001 and a change module 1002.

The receiving module 1001 is configured to receive a first message, where the first message is used to request a core network entity to change a current communication path of the first UE.

The change module 1002 is configured to change the current communication path of the first UE to a new communication path, so that the first UE accesses a network by using the new communication path.

In some optional embodiments,
the receiving module 1001 is specifically configured to receive the first message sent by the second UE, where the first message includes an identity of the first UE.

In some optional embodiments,
the receiving module 1001 is specifically configured to receive the first message that is sent by the first UE by using the second UE, where the first message includes an identity of the first UE and an evolved universal terrestrial radio access network cell global identifier ECGI of a target cell that is detected by the first UE.

In some optional embodiments,
the change module 1002 is specifically configured to: send a second message to a first base station, so that the first base station generates a target to source transparent container, and sends the target to source transparent container to the core network entity by using a third message, where the first base station is a base station serving the second UE; and change the current communication path of the first UE to the new communication path according to the target to source transparent container.

In some optional embodiments,
the change module 1002 is specifically configured to: obtain a second base station, where the second base station is a base station corresponding to the ECGI; send a fourth message to the first base station, so that the first base station sends a fifth message to the core network entity; send a second message to the second base station, so that the second base station generates a target to source transparent container, and sends the target to source transparent container to the core network entity by using a third message; and change the current communication path of the first UE to the new communication path according to the target to source transparent container.

In some optional embodiments,
the change module 1002 is specifically configured to: obtain a first evolved packet system bearer identity EBI, where the first EBI is an EBI of the first UE; obtain a second EBI of the second UE according to the first EBI of the first UE; and add the second EBI to the second message, so that the first base station generates the target to source transparent container according to the second EBI.

In some optional embodiments,
the change module 1002 is specifically configured to: obtain a first EBI, where the first EBI is an EBI of the first UE; obtain a second EBI of the second UE according to the first EBI of the first UE; add the second EBI to the fourth message, so that the first base station generates a source to target transparent container according to the second EBI, and sends the source to target transparent container to the core network entity by using the fifth message; and add the source to target transparent container to the second message, so that the second base station generates the target to source transparent container according to the source to target transparent container.

In some optional embodiments, the apparatus 1000 further includes:
an obtaining module 1003, configured to: after the change module changes the current communication path of the first UE to the new communication path, obtain bearer context of the first UE, where the bearer context of the first UE saves a mapping relationship between the first EBI corresponding to the target bearer of the first UE and the second EBI of the second UE, where
the obtaining module 1003 is further configured to: obtain the second EBI of the second UE according to the mapping relationship, and send a sixth message to the first base station, so that the first base station sends a seventh message to the second UE, to delete a bearer corresponding to the second EBI of the second UE.

In some optional embodiments, the apparatus 1000 further includes:
a deletion module 1004, configured to delete the mapping relationship between the first EBI of the first UE and the second EBI of the second UE in the bearer context of the first UE.

In this embodiment of the present invention, the receiving module receives a first message, where the first message is used to request the core network entity to change a current communication path of the first UE; and the change module changes the current communication path of the first UE to a new communication path, so that the first UE accesses a network by using the new communication path. Communication is not interrupted, so as to ensure continuity of a related service of the first UE.

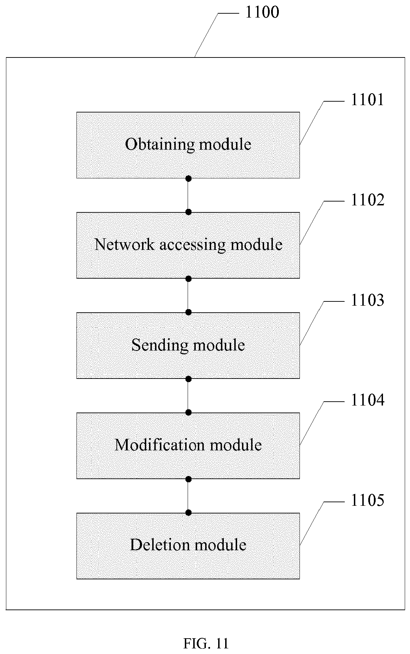

Based on the embodiment shown in FIG. 10, referring to FIG. 11, an embodiment of an apparatus 1100 for accessing a network in an embodiment of the present invention includes: an obtaining module 1101 and a network accessing module 1102.

The obtaining module 1101 is configured to obtain a new communication path, where a core network entity changes a current communication path of the first UE to the new communication path.

The network accessing module 1102 is configured to access a network according to the new communication path.

In some optional embodiments, the apparatus 1100 further includes:
the obtaining module 1101, further configured to obtain network information from the second UE;
the obtaining module 1101, further configured to obtain, according to the network information, an evolved universal terrestrial radio access network cell global identifier ECGI of a target cell that is detected by the first UE; and
a sending module 1103, configured to send a first message to the second UE, so that the second UE sends the first message to the core network entity.

Further, the network information includes at least one of the following content:
a globally unique temporary UE identity GUTI of the first UE;
an access frequency of a cell on which the second UE currently camps;
a physical cell ID of a cell on which the second UE currently camps; or
a system information block SIB of a cell on which the second UE currently camps.

In some optional embodiments, the apparatus 1100 further includes:
a modification module 1104, configured to: after the network accessing module accesses the network according to the new communication path, modify a mapping target of an uplink traffic flow template TFT from a device to device bearer identity DBI to a first EBI corresponding to the target bearer on the first UE.

In some optional embodiments, the apparatus 1100 further includes:
a deletion module 1105, configured to: after the modification module modifies the mapping target of the uplink traffic flow template TFT from the device to device bearer identity DBI to the first EBI corresponding to the target bearer on the first UE, delete, by the first UE, a mapping relationship between the DBI and the first EBI.

In this embodiment of the present invention, the obtaining module obtains a new communication path, and a core network entity changes a current communication path of the first UE to the new communication path; and the network accessing module accesses a network according to the new communication path. It can be seen that communication is not interrupted, so as to ensure continuity of a related service of a WD.

In the foregoing embodiments, the description of each embodiment has respective focuses. For a part that is not described in detail in an embodiment, refer to related descriptions in other embodiments.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be saved in a computer-readable storage medium. Based on such an understanding, the technical solutions of the present invention essentially, or the part contributing to the prior art, or all or some of the technical solutions may be implemented in the form of a software product. The computer software product is saved in a storage medium and includes several instructions for instructing a computer device (which may be a personal computer, a server, or a network device) to perform all or some of the steps of the methods described in the embodiments of the present invention. The foregoing storage medium includes: any medium that can save program code, such as a USB flash drive, a removable hard disk, a read-only memory (ROM, Read-Only Memory), a random access memory (RAM, Random Access Memory), a magnetic disk, or an optical disc.

The data transmission method and the related device provided in the present invention are described in detail above. The principle and implementations of the present invention are described herein by using specific examples. The descriptions about the embodiments are merely provided to help understand the method and core ideas of the present invention.

## Claims

1. A data transmission method, comprising:
Sending (201, 504), by first user equipment UE, a first message to a core network entity, for the core network entity obtaining (505) a bearer context of the first UE and setting up a target bearer for the first UE between the first UE and a serving gateway, wherein the first message is used by the first UE to request to change from accessing a network by using second UE to directly accessing the network; and
Transmitting (202), by the first UE, data by using the target bearer;
wherein before the sending, by first user equipment UE, a first message to a core network entity, the method further comprises:
sending (501), by the first UE, a seventh message to the second UE, wherein the seventh message is used to request the second UE to send network information to the first UE;
receiving (502), by the first UE, the network information sent by the second UE;
accessing (503), by the first UE, the network by using the network information;
setting up (507), by the first UE, a radio bearer between the first UE and a base station; and
receiving (512), by the first UE, a TAU confirm message sent from the network entity for setting up the target bearer on the first UE.
wherein the network information comprises
a globally unique temporary UE identity GUTI of the first UE; and
wherein the first message is a tracking area update TAU message and includes the GUTI.

2. The method according to claim 1, wherein before the transmitting, by the first UE, data by using the target bearer, the method further comprises:
modifying, by the first UE, a mapping target of an uplink traffic flow template TFT from a device to device bearer identity DBI to a first EBI corresponding to the target bearer for the first UE.

3. The method according to claim 2, wherein after the modifying, by the first UE, a mapping target of an uplink traffic flow template TFT from a device to device bearer identity DBI to a first EBI corresponding to the target bearer for the first UE, the method further comprises:
deleting, by the first UE, a mapping relationship between the DBI and the first EBI.

4. A first user equipment, UE, (900), comprising:
a sending module (901), configured to send a first message to a core network entity, for the core network entity obtaining a bearer context of the first UE and setting up a target bearer for the first UE between the first UE and a serving gateway, wherein the first message is used by the first UE to request to change from accessing a network by using second UE to directly accessing the network; and
a data transmission module (902), configured to transmit data by using the target bearer;
wherein the first UE further comprises:
the sending module (901), further configured to: before sending the first message to the core network entity, send a seventh message to the second UE, wherein the seventh message is used to request the second UE to send network information to the first UE;
a receiving module (903), configured to receive the network information sent by the second UE;
a network accessing module (904), configured to access the network by using the network information; to set up a radio bearer between the first UE and a base station; and to receive a TAU confirm message sent from the network entity for setting up the target bearer on the first UE;
wherein the network information comprises a globally unique temporary UE identity GUTI of the first UE; and wherein the first message is a tracking area update TAU message and includes the GUTI.

## Patentansprüche

1. Datenübertragungsverfahren, umfassend:
Senden (201, 504), durch ein erstes Benutzergerät, UE, einer ersten Nachricht an eine Kernnetzinstanz, damit die Kernnetzinstanz einen Trägerkontext des ersten UE erhält (505) und einen Zielträger für das erste UE zwischen dem ersten UE und einem bedienenden Gateway einrichtet, wobei die erste Nachricht vom ersten UE dazu verwendet wird, einen Wechsel vom Zugriff auf ein Netzwerk unter Verwendung eines zweiten UE zum direkten Zugriff auf das Netzwerk anzufordern; und
Übertragen (202), durch das erste UE, von Daten unter Verwendung des Zielträgers; wobei das Verfahren vor dem Senden, durch das erste Benutzergerät, UE, einer ersten Nachricht an eine Kernnetzinstanz, ferner umfasst:
Senden (501), durch das erste UE, einer siebten Nachricht an das zweite UE, wobei die siebte Nachricht dazu verwendet wird, das zweite UE aufzufordern, Netzwerkinformationen an das erste UE zu senden;
Empfangen (502), durch das erste UE, der vom zweiten UE gesendeten Netzwerkinformationen;
Zugreifen (503), durch das erste UE, auf das Netzwerk unter Verwendung der Netzwerkinformationen;
Einrichten (507), durch das erste UE, eines Funkträgers zwischen dem ersten UE und
einer Basisstation; und
Empfangen (512), durch das erste UE, einer TAU-Bestätigungsnachricht, die von der Netzinstanz zum Einrichten des Zielträgers am ersten UE gesendet wird,
wobei die Netzwerkinformationen umfassen:
eine "Globally Unique Temporary UE Identity", GUTI, des ersten UE; und
wobei die erste Nachricht eine "Tracking Area Update"-, TAU-, Nachricht ist und die GUTI beinhaltet.

2. Verfahren nach Anspruch 1, wobei das Verfahren vor dem Übertragen, durch das erste UE, von Daten unter Verwendung des Zielträgers ferner umfasst:
Modifizieren, durch das erste UE, eines Zuordnungsziels eines Uplink-"Traffic Flow Template", TFT, von einer Gerät-zu-Gerät-Trägeridentität, DBI, zu einer ersten EBI, die dem Zielträger für das erste UE entspricht.

3. Verfahren nach Anspruch 2, wobei das Verfahren nach dem Modifizieren, durch das erste UE, eines Zuordnungsziels eines Uplink-"Traffic Flow Template", TFT, von einer Gerät-zu-Gerät-Trägeridentität, DBI, zu einer ersten EBI, die dem Zielträger für das erste UE entspricht, ferner umfasst:
Löschen, durch das erste UE, einer Zuordnungsbeziehung zwischen der DBI und der ersten EBI.

4. Erstes Benutzergerät, UE, (900), umfassend:
ein Sendemodul (901), das dafür ausgelegt ist, eine erste Nachricht an eine Kernnetzinstanz zu senden, damit die Kernnetzinstanz einen Trägerkontext des ersten UE erhält und einen Zielträger für das erste UE zwischen dem ersten UE und einem bedienenden Gateway einrichtet, wobei die erste Nachricht vom ersten UE dazu verwendet wird, einen Wechsel vom Zugriff auf ein Netzwerk unter Verwendung eines zweiten UE zum direkten Zugriff auf das Netzwerk anzufordern; und
ein Datenübertragungsmodul (902), das zum Übertragen von Daten unter Verwendung des Zielträgers ausgelegt ist;
wobei das erste UE ferner umfasst:
das Sendemodul (901), das ferner für folgenden Vorgang ausgelegt ist: vor dem Senden der ersten Nachricht an die Kernnetzinstanz, Senden einer siebten Nachricht an das zweite UE, wobei die siebte Nachricht dazu verwendet wird, das zweite UE aufzufordern, Netzwerkinformationen an das erste UE zu senden;
ein Empfangsmodul (903), das dafür ausgelegt ist, die vom zweiten UE gesendeten Netzwerkinformationen zu empfangen;
ein Netzwerkzugriffsmodul (904), das dafür ausgelegt ist, unter Verwendung der Netzwerkinformationen auf das Netzwerk zuzugreifen; einen Funkträger zwischen dem ersten UE und einer Basisstation einzurichten; und eine TAU-Bestätigungsnachricht zu empfangen, die von der Netzinstanz zum Einrichten des Zielträgers am ersten UE gesendet wird;
wobei die Netzwerkinformationen eine "Globally Unique Temporary UE Identity", GUTI, des ersten UE umfassen; und wobei die erste Nachricht eine "Tracking Area Update"-, TAU-, Nachricht ist und die GUTI beinhaltet.

## Revendications

1. Procédé de transmission de données, comprenant de :
envoyer (201, 504), par un premier équipement utilisateur UE, un premier message à une entité de réseau central, pour que l'entité de réseau central obtienne (505) un contexte de support du premier UE et établisse un support cible pour le premier UE entre le premier UE et une passerelle de desserte, dans lequel le premier message est utilisé par le premier UE pour demander de passer de l'accès à un réseau en utilisant un deuxième UE à l'accès direct au réseau ; et
transmettre (202), par le premier UE, des données en utilisant le support cible ;
dans lequel avant l'envoi, par le premier équipement utilisateur, UE, d'un premier message à une entité de réseau central, le procédé comprend en outre de :
envoyer (501), par le premier UE, un septième message au deuxième UE, dans lequel le septième message est utilisé pour demander au deuxième UE d'envoyer des informations de réseau au premier UE ;
recevoir (502), par le premier UE, les informations de réseau envoyées par le deuxième UE;
accéder (503), par le premier UE, au réseau en utilisant les informations de réseau ;
établir (507), par le premier UE, un support radio entre le premier UE et une station de base ; et
recevoir (512), par le premier UE, un message de confirmation de TAU envoyé par l'entité de réseau pour établir le support cible sur le premier UE.
dans lequel les informations de réseau comprennent :
une identité d'UE temporaire globalement unique, GUTI, du premier UE ; et
dans lequel le premier message est un message de mise à jour de la zone de suivi, TAU,
et comprend le GUTI.

2. Procédé selon la revendication 1, dans lequel avant la transmission, par le premier UE, de données en utilisant le support cible, le procédé comprend en outre de :
modifier, par le premier UE, une cible de mappage d'un modèle de flux de trafic, TFT, de liaison montante d'une identité de support de dispositif à dispositif, DBI, à un premier EBI correspondant au support cible pour le premier UE.

3. Procédé selon la revendication 2, dans lequel après la modification, par le premier UE, d'une cible de mappage d'un modèle de flux de trafic, TFT, de liaison montante d'une identité de support de dispositif à dispositif, DBI, à un premier EBI correspondant au support cible pour le premier UE, le procédé comprend en outre de :
supprimer, par le premier UE, une relation de mappage entre la DBI et le premier EBI.

4. Premier équipement utilisateur, UE, (900), comprenant :
un module d'envoi (901), configuré pour envoyer un premier message à une entité de réseau central, pour que l'entité de réseau central obtienne un contexte de support du premier UE et établisse un support cible pour le premier UE entre le premier UE et une passerelle de desserte, dans lequel le premier message est utilisé par le premier UE pour demander de passer de l'accès à un réseau en utilisant un deuxième UE à l'accès direct au réseau ; et
un module de transmission de données (902), configuré pour transmettre des données en utilisant le support cible ;
dans lequel le premier UE comprend en outre :
le module d'envoi (901), configuré en outre pour : avant d'envoyer le premier message à l'entité de réseau central, envoyer un septième message au deuxième UE, dans lequel le septième message est utilisé pour demander au deuxième UE d'envoyer des informations de réseau au premier UE ;
un module de réception (903), configuré pour recevoir les informations de réseau envoyées par le deuxième UE ;
un module d'accès au réseau (904), configuré pour accéder au réseau en utilisant les informations de réseau, pour établir un support radio entre le premier UE et une station de base, et pour recevoir un message de confirmation de TAU envoyé par l'entité de réseau pour établir le support cible sur le premier UE ;
dans lequel les informations de réseau comprennent une identité d'UE temporaire globalement unique, GUTI, du premier UE, et dans lequel le premier message est un message de mise à jour de la zone de suivi, TAU, et comprend le GUTI.
